# EUROPEAN PATENT APPLICATION

(11) **EP 4 397 882 A1**
(43) Date of publication of application: **10.07.2024**
(21) Application number: 22864556.0
(22) Date of filing: 30.08.2022
(51) Int. Cl.: F16D 65/02, F16D 65/095, F16D 65/097, F16D 55/225, F16D 55/228

(54) **DISC BRAKE AND FRICTION PAD FOR VEHICLE**

(30) Priority: 31.08.2021 JP 2021141945
(71) Applicant: Hitachi Astemo, Ltd., Ibaraki 312-8503 (JP)
(72) Inventor: ATSUTA, Daiki, Hitachinaka-shi, Ibaraki 312-8503 (JP)
(74) Representative: Hoefer & Partner Patentanwälte mbB
(86) International application number: PCT/JP2022/032571
(87) International publication number: WO 2023/032974

(57) **Abstract**

In a vehicular disc brake and a friction mud capable of preventing a position of a pad spring from being displaced at the time of assembly and improving an assembling property, a pad spring 6 includes: a hanger pin abutting portion 6a that abuts against an outer peripheral surface on a disc radial inner side of a hanger pin 4; a first elastic portion 6c and a second elastic portion 6e that abut against a pair of friction pads 5, 5 and urge the friction pads 5, 5 to a disc radial inner side; and a first positioning piece 6g and a second positioning piece 6h that abut against the friction pads 5, 5 to determine positioning of the pad spring 6 when the friction pads 5, 5 and the pad spring 6 are assembled to a caliper body 3.

## Description

### Technical Field

The present invention relates to a vehicular disc brake, and more particularly to a vehicular disc brake and a friction pad in which rattling of the friction pad suspended by a hanger pin is prevented by a pad spring.

### Background Art

In the related art, in a vehicular disc brake that prevents rattling of friction pads suspended by a hanger pin by a pad spring, the hanger pin, disposed in a disc axial direction across an outer periphery of a disc rotor and suspending a pair of friction pads so as to be movable in a disc rotor axial direction, is provided in a ceiling opening portion formed in a bridge portion of a caliper body, the pad spring is arranged between the hanger pin and each of the friction pads, and the friction pads are urged to a disc radial inner side by an elastic piece of the pad spring to prevent rattling of the friction pads (see, for example, PTL 1).

### Citation list

### Patent Literature

PTL 1: JP5171797B

### Summary of Invention

### Technical Problem

In the vehicular disc brake of PTL 1 described above, when the friction pads and the pad spring are assembled, the pair of friction pads are arranged in a friction pad accommodating portion, the pad spring is arranged on a disc radial outer side of the friction pads, the hanger pin is inserted into each of the friction pads, the friction pads are assembled to the caliper body, the pad spring is assembled between the hanger pin and each of the friction pads, and the elastic piece of the pad spring abuts against each of the friction pads.

However, when the hanger pin is inserted into each of the friction pads, and the pad spring is assembled between the hanger pin and each of the friction pads, the pad spring is displaced, and the pad spring cannot be assembled to a proper position in some cases.

Therefore, an object of the invention is to provide a vehicular disc brake and a friction pad that can prevent a position of a pad spring from being displaced during assembly and improve an assembling property of the pad spring.

### Solution to Problem

In order to achieve the above object, a vehicular disc brake according to the invention includes: a caliper body including: an action portion arranged on a side portion of a disc rotor and having a cylinder hole into which a piston is to be inserted; and a bridge portion arranged across an outer periphery of the disc rotor; a pair of friction pads arranged on both side portions of the disc rotor; a hanger pin disposed in a disc axial direction across an outer periphery of the disc rotor and configured to suspend the pair of friction pads so as to be movable in a disc rotor axial direction; and a pad spring disposed between the hanger pin and the friction pads and configured to urge the friction pads to at least a disc radial inner side, in which the pad spring includes: a hanger pin abutting portion that abuts against an outer peripheral surface on a disc radial inner side of the hanger pin; an elastic portion that abuts against the pair of friction pads and urges the friction pads to a disc radial inner side; and a positioning piece that abuts against the friction pads to determine positioning of the pad spring when the friction pads and the pad spring are assembled to the caliper body.

It is preferable that the caliper body includes a friction pad accommodating portion that accommodates the friction pads, a locking groove that locks the pad spring is formed on a disc turn-in side wall of the friction pad accommodating portion when a vehicle is moving forward, the pad spring includes: a first elastic portion that abuts against a disc turn-in side of the friction pads when a vehicle is moving forward and that urges the friction pads to at least a disc radial inner side; and a second elastic portion that abuts against a disc turn-out side of the friction pads when a vehicle is moving forward and that urges the friction pads to a disc radial inner side and to a disc turn-out side, the first elastic portion is provided with the positioning piece and a locking piece inserted into the locking groove, and the locking groove is formed on a disc radial outer side than an accommodating groove of the disc rotor.

It is preferable that the bridge portion includes a ceiling opening portion in an intermediate portion in a disc circumferential direction, the first elastic portion is formed to have a wide width in the disc axial direction and is provided with a first preventing portion that abuts against a wall portion of the ceiling opening portion to prevent a behavior of the pad spring, and an abutting surface of the wall portion against which the first preventing portion abuts is a casting surface.

It is preferable that the second elastic portion is formed to have a wide width in the disc axial direction and is provided with a second preventing portion that abuts against a wall portion of the ceiling opening portion to prevent a behavior of the pad spring, and an abutting surface of the wall portion against which the second preventing portion abuts is a casting surface.

It is preferable that in a friction pad used for a vehicular disc brake, the friction pad including a lining attached to a back plate, the back plate includes a suspension piece having a pin insertion hole in an intermediate portion in a longitudinal direction, and a pad spring abutting portion against which a positioning piece of a pad spring provided in the vehicular disc brake abuts is provided in parallel with the suspension piece when the friction pad is assembled to the vehicular disc brake.

It is preferable that the friction pad further includes a recessed portion between the pad spring abutting portion and the suspension piece, the recessed portion serving as a space portion capable of accommodating the positioning piece.

### Advantageous Effects of Invention

According to the vehicular disc brake of the invention, when the friction pad and the pad spring are assembled to the caliper body, the pad spring is prevented from being displaced by abutting the positioning piece formed on the pad spring against the friction pad, and an assembling property of the pad spring can be improved.

In addition, since the locking groove that locks the pad spring is formed on the disc turn-in side wall of the friction pad accommodating portion when a vehicle is moving forward, the pad spring includes: the first elastic portion that abuts against the disc turn-in side of the friction pads when a vehicle is moving forward and that urges the friction pads to the disc radial inner side; and the second elastic portion that abuts against the disc turn-out side of the friction pads and that urges the friction pads to the disc radial inner side, the first elastic portion is provided with the locking piece inserted into the locking groove, and the locking groove is formed on the disc radial outer side than the accommodating groove of the disc rotor, when the disc turn-out side and the disc turn-in side of the pad spring are erroneously arranged and assembled in reverse, a set load is greatly increased, and thus, the assembly cannot be performed, and erroneous assembly of the pad spring can be prevented.

Since the bridge portion includes the ceiling opening portion in the intermediate portion in the disc circumferential direction, and the first elastic portion of the pad spring is provided with the first preventing portion that abuts against the wall portion of the ceiling opening portion to prevent a behavior of the pad spring, unstable movement due to running vibration of the pad spring can be prevented. Further, since the abutting surface of the wall portion against which the first preventing portion abuts is a casting surface, processing cost can be reduced.

Since the second elastic portion is provided with the second preventing portion that abuts against the wall portion of the ceiling opening portion to prevent a behavior of the pad spring, unstable movement due to the running vibration of the pad spring can be prevented. Further, since the abutting surface of the wall portion against which the second preventing portion abuts is a casting surface, the processing cost can be reduced.

In the friction pad used for the vehicular disc brake, the friction pad including the lining attached to the back plate, the back plate includes the suspension piece having the pin insertion hole in the intermediate portion in the longitudinal direction, and the pad spring abutting portion against which the positioning piece of the pad spring provided in the vehicular disc brake abuts is provided in parallel with the suspension piece when the friction pad is assembled to the vehicular disc brake, so that the pad spring can be positioned by the friction pad. In addition, by including the recessed portion between the pad spring abutting portion and the suspension piece, the recessed portion serving as a space portion capable of accommodating the positioning piece, the positioning piece can be easily accommodated, and a weight of the friction pad can be reduced.

### Brief Description of Drawings

[FIG. 1] FIG. 1 is a front view of a vehicular disc brake showing an embodiment of the invention.
[FIG. 2] FIG. 2 is a rear view of the same vehicular disc brake.
[FIG. 3] FIG. 3 is a plan view of the same vehicular disc brake.
[FIG. 4] FIG. 4 is a side view of the same vehicular disc brake.
[FIG. 5] FIG. 5 is a cross-sectional view taken along a line V-V in FIG. 4.
[FIG. 6] FIG. 6 is a cross-sectional view taken along a line VI-VI in FIG. 1.
[FIG. 7] FIG. 7 is a cross-sectional view taken along a line VII-VII in FIG. 1.
[FIG. 8] FIG. 8 is a view illustrating a case where friction pads and a pad spring are assembled to a caliper body.
[FIG. 9] FIG. 9 is a perspective view of the pad spring.

### Description of Embodiments

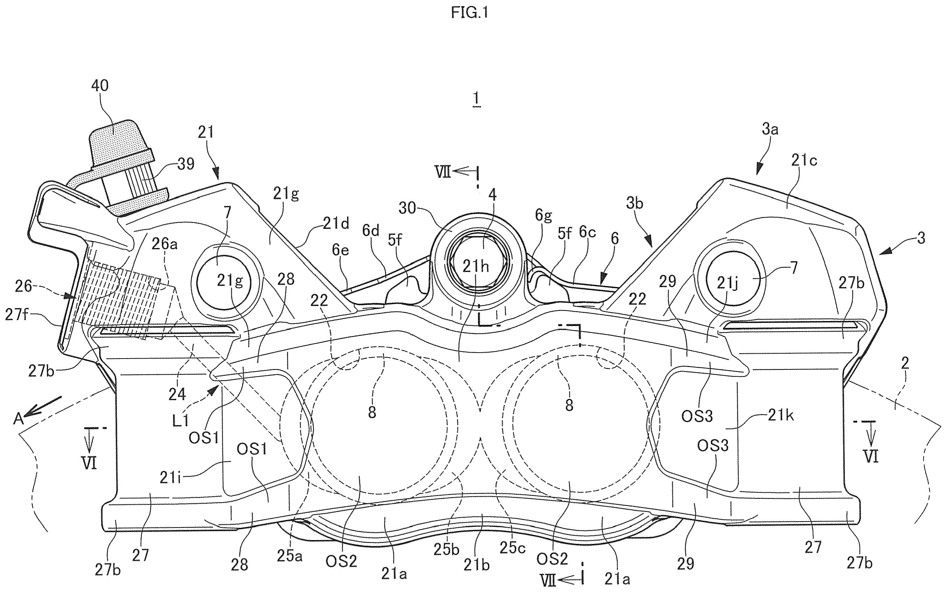

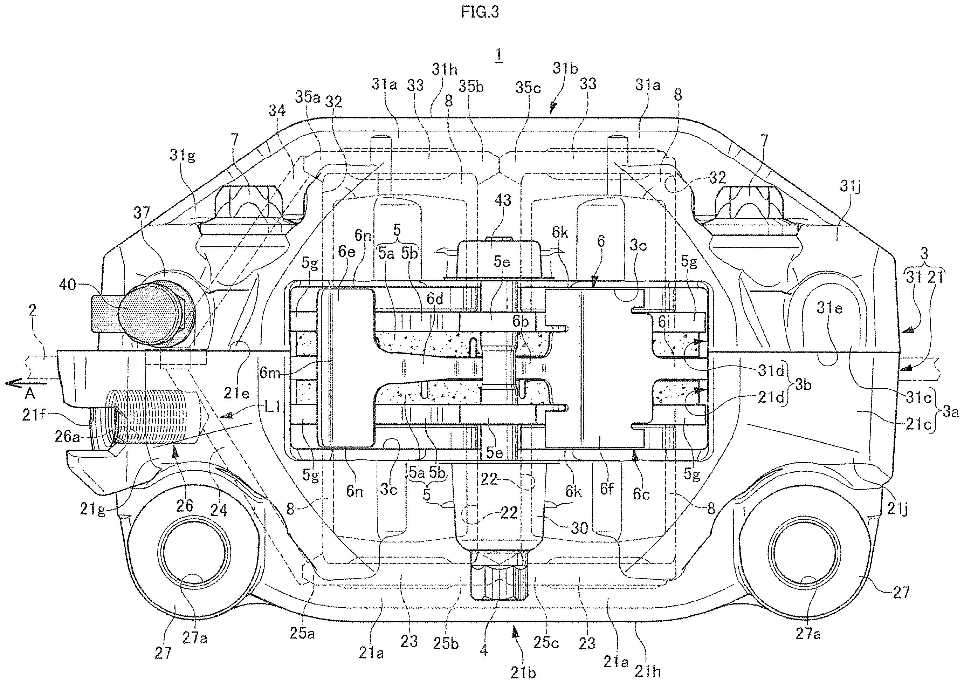

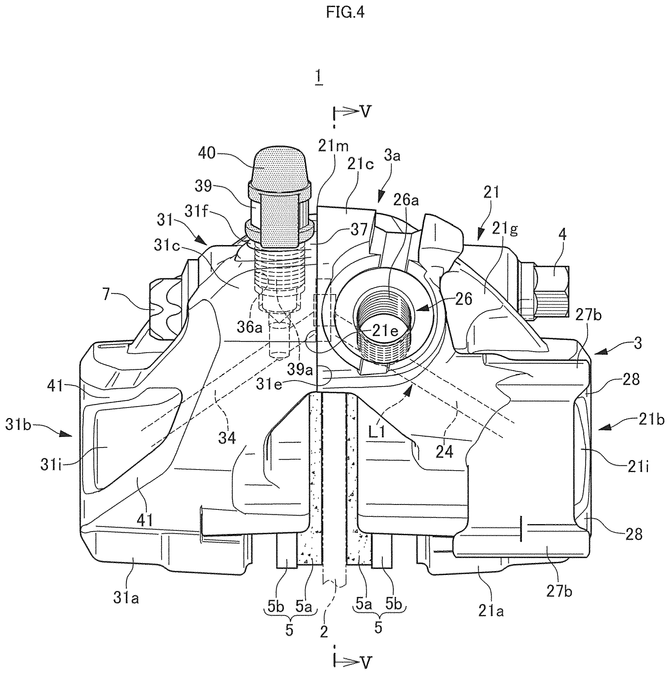

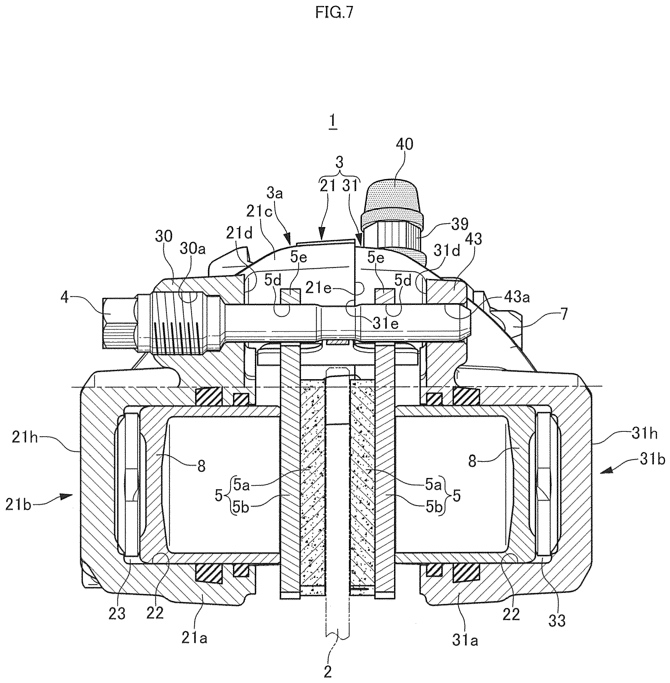

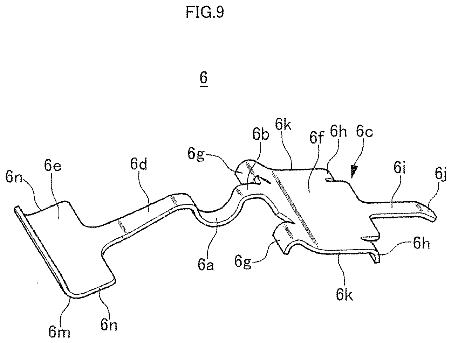

FIGS. 1 to 9 are views showing an embodiment of a vehicular disc brake and a friction pad of the invention, in which an arrow A indicates a rotation direction of a disc rotor that rotates integrally with wheels when a vehicle is moving forward, and a disc turn-out side and a disc turn-in side to be described later indicate those when the vehicle is moving forward.

A vehicular disc brake 1 includes: a disc rotor 2 that rotates integrally with wheels (not shown) in an arrow A direction; a caliper body 3 attached to a vehicle body on one side of the disc rotor 2; and a pair of friction pads 5, 5 that are arranged inside the caliper body 3 so as to face each other with the disc rotor 2 interposed therebetween and are suspended by a hanger pin 4. A pad spring 6 that prevents rattling of the friction pads 5, 5 abuts against the friction pads 5, 5.

The caliper body 3 is a divided type caliper body which is a radial mount type, is divided at a bridge portion 3a straddling an outer peripheral side of the disc rotor 2 and is formed by integrally coupling, with two coupling bolts 7, 7, an opposing-vehicle-body-side caliper half body 21 and a vehicle-body-side caliper half body 31, . In addition, a rectangular ceiling opening portion 3b including wall portions 3c, 3c parallel to the disc rotor 2 and wall portions 3d, 3d parallel to a disc axis is formed in a central portion of the bridge portion 3a in a disc circumferential direction.

The opposing-vehicle-body-side caliper half body 21 includes an action portion 21b in which cylinder portions 21a, 21a each having a cylinder hole 22 into which a piston 8 is inserted are arranged side by side in the disc circumferential direction, and a bridge portion half body 21c constituting substantially half of the bridge portion 3a, and the vehicle-body-side caliper half body 31 also includes an action portion 31b in which cylinder portions 31a, 31a each having a cylinder hole 32 into which the piston 8 is inserted are arranged side by side in the disc circumferential direction, and a bridge portion half body 31c constituting substantially half of the bridge portion 3a, similar to the opposing-vehicle-body-side caliper half body 21. In addition, an opposing-vehicle-body-side ceiling opening portion 21d and a vehicle-body-side ceiling opening portion 31d, which constitute substantially half of the ceiling opening portion 3b, are formed in the bridge portion half body 21c and the bridge portion half body 31c, respectively.

In the opposing-vehicle-body-side caliper half body 21, hydraulic pressure chambers 23, 23 to which a working fluid is introduced are defined between bottom portion sides of the cylinder holes 22, 22 and the pistons 8, 8. In addition, a first working fluid introduction hole 24 is drilled from a disc turn-out side of a divided surface 21e serving as a bonding surface of the bridge portion half body 21c toward the hydraulic pressure chamber 23 on the disc turn-out side, and a part of a bottom of the cylinder hole 22 on the disc turn-out side includes a first contouring machining portion 25a that allows the hydraulic pressure chamber 23 on the disc turn-out side and the first working fluid introduction hole 24 to communicate with each other by a contouring process, and a second contouring machining portion 25b that is contoured toward the hydraulic pressure chamber 23 on the disc turn-in side. Further, a part of a bottom of the cylinder hole 22 on the disc turn-in side includes a third contouring machining portion 25c that is contoured toward the second contouring machining portion 25b. The second contouring machining portion 25b and the third contouring machining portion 25c communicate with each other, whereby the first working fluid introduction hole 24, the hydraulic pressure chamber 23 on the disc turn-out side, and the hydraulic pressure chamber 23 on the disc turn-in side communicate with one another.

In addition, a union hole 26 opening to a disc turn-out side surface 21f of the bridge portion half body 21c and the first working fluid introduction hole 24 is provided on the disc turn-out side of the bridge portion half body 21c, and a female screw portion 26a into which a union bolt (not shown) is screwed is formed on an opening side of the union hole 26. In addition, radial mount type vehicle body attachment portions 27, 27 are formed on the disc turn-in side and the disc turn-out side of the opposing-vehicle-body-side caliper half body 21, attachment bolt insertion holes 27a, 27a in a disc radial direction are formed in the vehicle body attachment portions 27, 27, and the caliper body 3 is attached on a vehicle body by screwing attachment bolts inserted into the attachment bolt insertion holes 27a, 27a to caliper attachment portions provided on the vehicle body side. In addition, large-diameter flange portions 27b, 27b for reinforcement are formed at an outer end portion in the disc radial direction and an inner end portion in the disc radial direction of each vehicle body attachment portion 27, respectively.

The action portion 21b of the opposing-vehicle-body-side caliper half body 21 includes the cylinder portions 21a, 21a having the cylinder holes 22, 22, a turn-out side body portion 21g extending from the cylinder portion 21a on the disc turn-out side to the disc turn-out side, and a turn-in side body portion 21j extending from the cylinder portion 21a on the disc turn-in side to the disc turn-in side. A pair of first reinforcing ribs 28, 28 are provided on the disc radial outer side and the disc radial inner side of an opposing disc rotor side surface 21h of the turn-out side body portion 21g, and the first reinforcing rib 28 on the disc radial outer side connects the cylinder portion 21a on the disc turn-out side and the large-diameter flange portion 27b on the disc radial outer side of the vehicle body attachment portion 27 on the disc turn-out side. In addition, the first reinforcing rib 28 on the disc radial inner side connects the cylinder portion 21a on the disc turn-out side and the large-diameter flange portion 27b on the disc radial inner side of the vehicle body attachment portion 27 on the disc turn-out side. Further, a first thinning portion 21i serving as a thin-walled portion is formed, by casting, on the opposing disc rotor side surface 21h between the first reinforcing ribs 28, 28.

A pair of second reinforcing ribs 29, 29 are provided on the disc radial outer side and the disc radial inner side of the opposing disc rotor side surface 21h of the turn-in side body portion 21j, and the second reinforcing rib 29 on the disc radial outer side connects the cylinder portion 21a on the disc turn-in side and the large-diameter flange portion 27b on the disc radial outer side of the vehicle body attachment portion 27 on the disc turn-in side. In addition, the second reinforcing rib 29 on the disc radial inner side connects the cylinder portion 21a on the disc turn-in side and the large-diameter flange portion 27b on the disc radial inner side of the vehicle body attachment portion 27 on the disc turn-in side. Further, a second thinning portion 21k serving as a thin-walled portion is formed, by casting, on the opposing disc rotor side surface 21h between the second reinforcing ribs 29, 29.

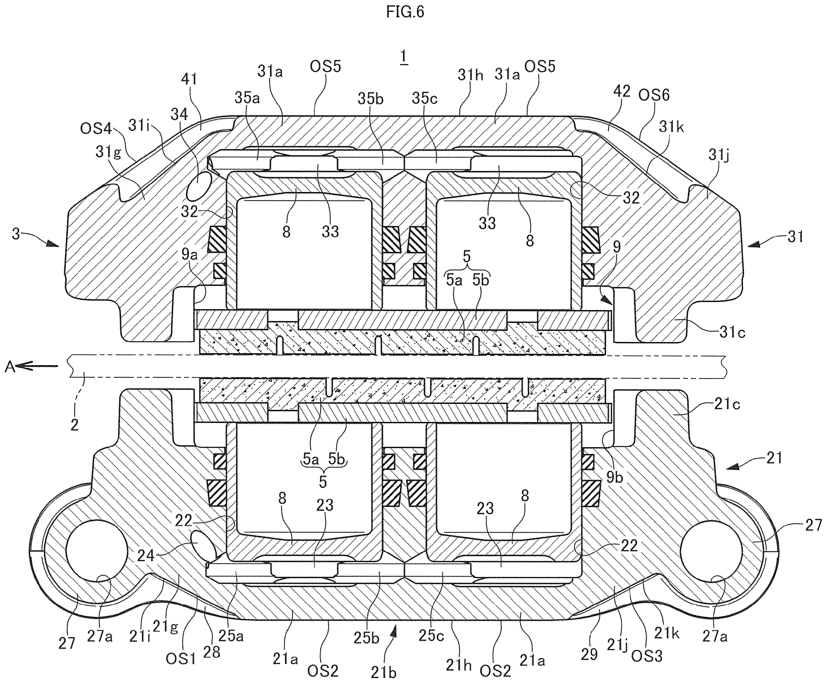

As shown in FIGS. 1 and 6, an outer surface (opposing disc rotor side surface) OS1 of each first reinforcing rib 28 is formed to be gradually inclined toward a disc rotor side toward the disc turn-out side than an outer surface OS2 (opposing disc rotor side surface) of the cylinder portion 21a, and similarly, an outer surface (opposing disc rotor side surface) OS3 of each second reinforcing rib 29 is also formed to be gradually inclined toward the disc rotor side toward the disc turn-in side than the outer surface OS2 (opposing disc rotor side surface) of the cylinder portion 21a.

An attachment boss portion 30 having a pin insertion hole 30a through which the hanger pin 4 is inserted is formed in the central portion in the disc circumferential direction on the disc radial outer side surface of the action portion 21b.

In the vehicle-body-side caliper half body 31, hydraulic pressure chambers 33, 33 to which a working fluid is introduced are defined between bottom portion sides of the cylinder holes 32, 32 and the pistons 8, 8. In addition, a second working fluid introduction hole 34 is drilled from the disc turn-out side of a divided surface 31e serving as a bonding surface of the bridge portion half body 31c toward the hydraulic pressure chamber 33 on the disc turn-out side, and the first working fluid introduction hole 24 and the second working fluid introduction hole 34 communicate with each other by the divided surfaces 21e, 31e. A part of the bottom of the cylinder hole 32 on the disc turn-out side includes a fourth contouring machining portion 35a that allows the hydraulic pressure chamber 33 on the disc turn-out side and the second working fluid introduction hole 34 to communicate with each other by a contouring process, and a fifth contouring machining portion 35b that is contoured toward the hydraulic pressure chamber 33 on the disc turn-in side. Further, a part of the bottom of the cylinder hole 32 on the disc turn-in side includes a sixth contouring machining portion 35c that is contoured toward the fifth contouring machining portion 35b. The fifth contouring machining portion 35b and the sixth contouring machining portion 35c communicate with each other, whereby the second working fluid introduction hole 34, the hydraulic pressure chamber 33 on the disc turn-out side, and the hydraulic pressure chamber 33 on the disc turn-in side communicate with one another.

A bleeder portion 37 having a bleeder hole 36 opening to a disc radial outer side surface 31f and the second working fluid introduction hole 34 is provided on the disc turn-out side of the bridge portion half body 31c.

A female screw portion 36a into which a bleeder screw 39 is screwed is formed on an opening side of the bleeder hole 36, the bleeder screw 39 is provided with an air discharge hole (not shown) on an inner peripheral portion thereof and a male screw portion 39a on an outer peripheral portion thereof, which is screwed into the female screw portion 36a, and a rubber bleeder cap 40 is covered to a tip end head portion thereof.

The action portion 31b of the vehicle-body-side caliper half body 31 includes the cylinder portions 31a, 31a having the cylinder holes 32, 32, a turn-out side body portion 31g extending from the cylinder portion 31a on the disc turn-out side to the disc turn-out side, and a turn-in side body portion 31j extending from the cylinder portion 31a on the disc turn-in side to the disc turn-in side. A pair of third reinforcing ribs 41, 41 are provided on the disc radial outer side and the disc radial inner side of an opposing disc rotor side surface 31h of the turn-out side body portion 31g, and the third reinforcing rib 41 on the disc radial outer side connects the cylinder portion 31a on the disc turn-out side and an end portion on the disc turn-out side of the turn-out side body portion 31g. In addition, the third reinforcing rib 41 on the disc radial inner side connects the cylinder portion 31a on the disc turn-out side and a disc turn-out side of the third reinforcing rib 41 on the disc radial outer side. Further, a third thinning portion 31i serving as a thin-walled portion is formed, by casting, on the opposing disc rotor side surface 31h between the third reinforcing ribs 41, 41.

Further, a pair of fourth reinforcing ribs 42, 42 are provided on the disc radial outer side and the disc radial inner side of the opposing disc rotor side surface 31h of the turn-in side body portion 31j, and the fourth reinforcing rib 42 on the disc radial outer side connects the cylinder portion 31a on the disc turn-in side and an end portion on the disc turn-in side of the turn-in side body portion 31j. In addition, the fourth reinforcing rib 42 on the disc radial inner side connects the cylinder portion 31a on the disc turn-in side and a disc rotor turn-in side of the fourth reinforcing rib 42 on the disc radial outer side. Further, a fourth thinning portion 31k serving as a thin-walled portion is formed, by casting, on the opposing disc rotor side surface 31h between the fourth reinforcing ribs 42, 42.

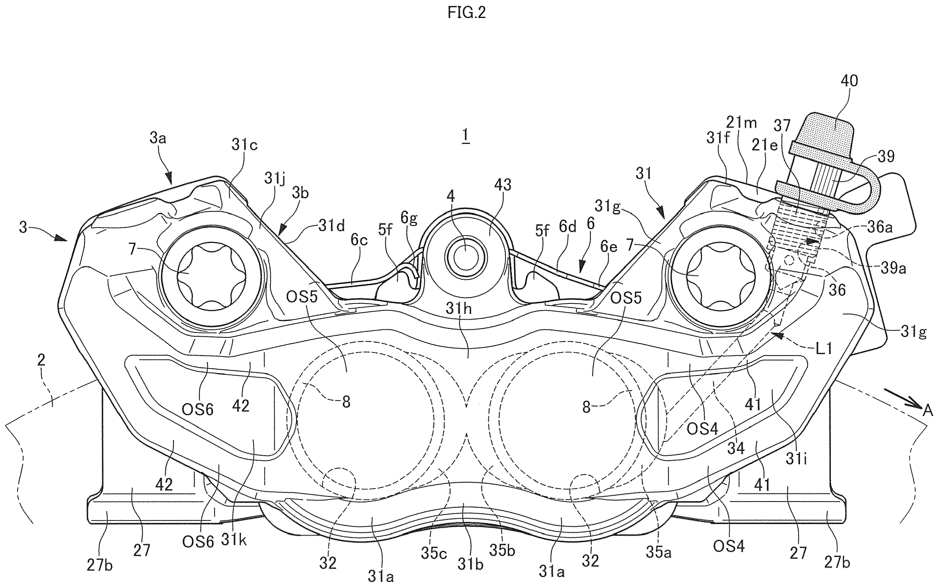

As shown in FIGS. 2 and 6, an outer surface (opposing disc rotor side surface) OS4 of each third reinforcing rib 41 is formed to be gradually inclined toward a disc rotor side toward the disc turn-out side than an outer surface OS5 (opposing disc rotor side surface) of the cylinder portion 31a, and similarly, an outer surface (opposing disc rotor side surface) OS6 of each fourth reinforcing rib 42 is also formed to be gradually inclined toward the disc rotor side toward the disc turn-in side than the outer surface OS5 (opposing disc rotor side surface) of the cylinder portion 31a.

An attachment boss portion 43 having a pin insertion hole 43a through which the hanger pin 4 is inserted is formed in the central portion in the disc circumferential direction on the disc radial outer side surface of the action portion 31b so as to face the attachment boss portion 30 of the opposing-vehicle-body-side caliper half body 21.

The caliper body 3 is formed by bonding the opposing-vehicle-body-side caliper half body 21 and the vehicle-body-side caliper half body 31, which are formed as described above, to each other at the bridge portion 3a with the divided surfaces 21e, 31e abutting against each other, and coupling the opposing-vehicle-body-side caliper half body 21 and the vehicle-body-side caliper half body 31 with the coupling bolts 7, 7. Further, by coupling the opposing-vehicle-body-side caliper half body 21 and the vehicle-body-side caliper half body 31, the first working fluid introduction hole 24 and the second working fluid introduction hole 34 communicate with each other, and accordingly, the first working fluid introduction hole 24, the second working fluid introduction hole 34, each hydraulic pressure chamber 23 of the opposing-vehicle-body-side caliper half body 21, and each hydraulic pressure chamber 33 of the vehicle-body-side caliper half body 31 communicate with each other, and thus, a fluid passage L1 is formed. In addition, since the union hole 26 communicates with the first working fluid introduction hole 24, a working fluid is supplied to the fluid passage L1 through the union hole 26. Further, since the bleeder hole 36 communicates with the second working fluid introduction hole 34, air mixed in the working fluid introduced into the fluid passage L1 is discharged to the outside through the bleeder screw 39.

A friction pad accommodating portion 9 that accommodates the friction pads 5 is formed in the turn-out side body portions 21g, 31g and the turn-in side body portions 21j, 31j. A disc turn-out side wall 9a of the friction pad accommodating portion 9 formed in the turn-out side body portions 21g, 31g and a disc turn-in side wall 9b of the friction pad accommodating portion 9 formed in the turn-in side body portions 21j, 31j are torque receiving portions that receive torque by abutting against the friction pads 5, 5 during braking, and further, a locking groove 9c that locks the pad spring 6 is formed in the disc turn-in side wall 9b.

Each friction pad 5 includes a lining 5a which is in sliding contact with a side surface of the disc rotor 2, and a metal back plate 5b to which the lining 5a is adhered. In the back plate 5b, a suspension piece 5e having a hanger pin insertion hole 5d through which the hanger pin 4 is inserted is provided to protrude from a central portion of a disc radial outer side surface 5c (an intermediate portion in a longitudinal direction of the back plate 5b), and a pair of first pad spring abutting portions 5f, 5f (pad spring abutting portions of the invention) against which the pad spring 6 abuts are provided adjacent to a disc turn-out side and a disc turn-in side of the suspension piece 5e. Further, a pair of second pad spring abutting portions 5g, 5g are provided to protrude from an end portion on the disc turn-out side and an end portion on the disc turn-in side of the disc radial outer side surface 5c, and the suspension piece 5e, the first pad spring abutting portions 5f, 5f, and the second pad spring abutting portions 5g, 5g are provided in parallel in a disc circumferential direction of the disc radial outer side surface 5c, respectively.

The hanger pin 4 is inserted into the pin insertion holes 30a, 43a of the attachment boss portions 30, 43, respectively, is disposed in the disc axial direction through the ceiling opening portion 3b of the caliper body 3, is inserted into the hanger pin insertion holes 5d, 5d of the suspension pieces 5e, 5e provided on the friction pad 5, and suspends the friction pads 5, 5 movably in the disc axial direction in a state where the friction pads 5, 5 are accommodated in the friction pad accommodating portion 9. In addition, the pad spring 6 is provided over the back plate 5b and the hanger pin 4, and the friction pads 5, 5 are pressed toward the disc radial inner side and the disc turn-out side.

The pad spring 6 is formed by bending a single plate material punched into a predetermined shape, and includes: an arc-shaped hanger pin abutting portion 6a that abuts against an outer peripheral surface of the hanger pin 4 on the disc radial inner side; a first elastic portion 6c that extends from the hanger pin abutting portion 6a to the disc turn-in side via a strip-shaped first spring piece 6b and abuts against the first pad spring abutting portion 5f on the disc turn-in side of the friction pads 5, 5; and a second elastic portion 6e that extends from the hanger pin abutting portion 6a to the disc turn-out side via a strip-shaped second spring piece 6d and abuts against the second pad spring abutting portion 5g on the disc turn-out side of the friction pads 5, 5.

The first elastic portion 6c includes: a first elastic piece 6f that abuts against the first pad spring abutting portion 5f on the disc turn-in side of the friction pad 5 to elastically push the friction pads 5, 5 toward the disc radial inner side and a disc rotor turn-out side; first positioning pieces 6g, 6g and second positioning pieces 6h, 6h that abut against the friction pads 5, 5 to determine positioning of the pad spring 6 when the friction pads 5, 5 and the pad spring 6 are assembled to the caliper body 3; and a locking piece 6i locked in the locking groove 9c.

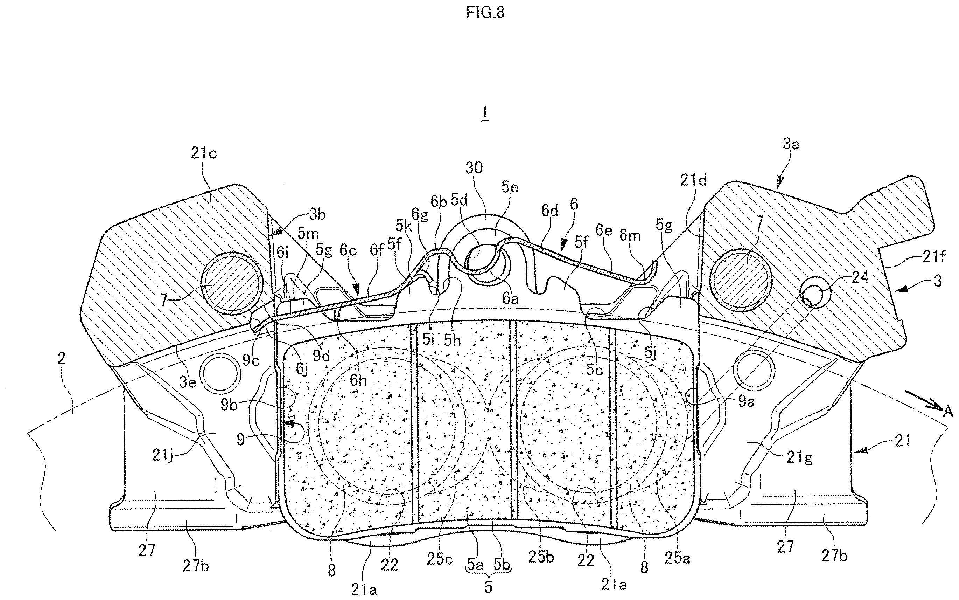

The first positioning pieces 6g, 6g and the second positioning pieces 6h, 6h are formed by cutting and raising a part of the first elastic piece 6f and bending the first elastic piece 6f toward the disc radial inner side in an arc shape. As shown in FIG. 8, when the friction pads 5, 5 and the pad spring 6 are assembled to the caliper body 3, the first positioning pieces 6g, 6g are inserted into recessed portions 5h, 5h (space portions) formed between the suspension pieces 5e, 5e and the first pad spring abutting portions 5f, 5f on the disc turn-in side, that is, the first positioning pieces 6g, 6g are accommodated in the recessed portions 5h, 5h, tip ends of the first positioning pieces 6g, 6g abut against the disc turn-out side surfaces 5i, 5i of the first pad spring abutting portions 5f, 5f, and the second positioning pieces 6h, 6h abut against the disc radial outer side surfaces 5c of the back plates 5b in the vicinity of the second pad spring abutting portions 5g, 5g on the disc turn-in side.

In addition, the locking piece 6i protrudes to the disc turn-in side from a central portion in a disc axial direction of an end portion on a disc turn-in side of the first elastic piece 6f, and a tip end portion 6j thereof is inserted into the locking groove 9c. Further, the first elastic piece 6f is formed to have a wide width in the disc axial direction, and end surfaces 6k, 6k (a first preventing portion of the invention) thereof on an opposing disc rotor side abut against the wall portions 3c, 3c of the ceiling opening portion 3b, respectively.

The second elastic portion 6e is formed by bending the disc turn-out side into the disc radial outer side in an arc shape, and abuts a bent portion 6m against the disc turn-in side surfaces 5j, 5j of the second pad spring abutting portions 5g, 5g on the disc turn-out side. Further, the second elastic portion 6e is formed to have a wide width in the disc axial direction, and end surfaces 6n, 6n (a second preventing portion of the invention) thereof on the opposing disc rotor side abut against the wall portions 3c, 3c of the ceiling opening portion 3b. In addition, the wall portions 3c, 3c on the opposing disc rotor side of the ceiling opening portion 3b against which the end surfaces 6k, 6k, 6n, 6n abut are formed by a casting surface, respectively. In addition, a disc radial outer side surface 9d of the locking groove 9c is formed on the disc radial outer side than an accommodating groove 3e of the disc rotor 2 formed on a disc rotor side surface of the bridge portion 3a.

When the friction pads 5, 5 and the pad spring 6, which are formed as described above, are assembled to the caliper body 3, first, as shown in FIG. 8, the friction pads 5, 5 are arranged in the friction pad accommodating portion 9, the pad spring 6 is arranged on the disc radial outer side of the friction pads 5, 5, and the tip end portion 6j of the locking piece 6i is locked to the locking groove 9c.

At this time, the first positioning pieces 6g, 6g are inserted into the recessed portions 5h, 5h formed between the suspension pieces 5e, 5e and the first pad spring abutting portions 5f, 5f on the disc turn-in side, the tip ends thereof abut against the disc turn-out side surfaces 5i, 5i of the first pad spring abutting portions 5f, 5f, and the second positioning pieces 6h, 6h abut against the disc radial outer side surfaces 5c, 5c in the vicinity of the second pad spring abutting portions 5g, 5g on the disc turn-in side, and are in a state where the pad spring 6 is positioned with respect to the friction pads 5, 5.

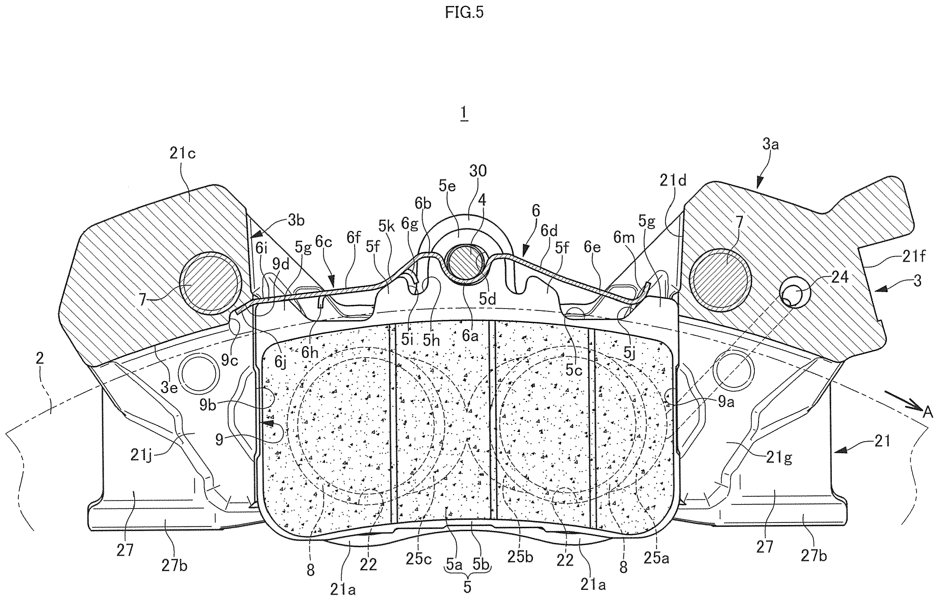

Next, the hanger pin 4 is inserted throughout the pin insertion hole 30a of the attachment boss portion 30 of the opposing-vehicle-body-side caliper half body 21, the pin insertion hole 43a of the attachment boss portion 43 of the vehicle-body-side caliper half body 31, and the hanger pin insertion holes 5d, 5d of the suspension pieces 5e, 5e provided on the friction pads 5, 5, and the friction pads 5, 5 are suspended by the hanger pin 4 so as to be movable in the disc axial direction. In addition, an outer peripheral surface on a disc radial inner side of the hanger pin 4 abuts against the hanger pin abutting portion 6a of the pad spring 6 to press the pad spring 6, whereby the pad spring 6 is arranged at a set normal position shown in FIG. 5.

In the pad spring 6 arranged at the normal position, the outer peripheral surface on the disc radial inner side of the hanger pin 4 abuts against the hanger pin abutting portion 6a of the pad spring 6, and the tip end portion 6j of the locking piece 6i is locked to the locking groove 9c. The first elastic piece 6f of the first elastic portions 6c abuts against disc radial outer side surfaces 5k, 5k of the first pad spring abutting portions 5f, 5f on the disc turn-in side of the friction pads 5, 5. Since the disc radial outer side surfaces 5k, 5k are formed to be gradually inclined toward the disc rotor side from the disc turn-out side toward the disc turn-in side, the first pad spring abutting portions 5f, 5f elastically push the friction pads 5, 5 toward the disc radial inner side and the disc turn-out side. The bent portion 6m of the second elastic portion 6e abuts against the disc turn-in side surfaces 5j, 5j of the second pad spring abutting portions 5g, 5g on the disc turn-out side of the friction pads 5, 5, and the second elastic portion 6e elastically push the friction pads 5, 5 toward the disc radial inner side and the disc turn-out side. Further, the end surfaces 6k, 6k, 6n, 6n abut against the wall portions 3c, 3c on the opposing disc rotor side of the ceiling opening portion 3b.

In the caliper body 3 of the present embodiment, as described above, when the pad spring 6 is provided with the first positioning piece 6g and the second positioning piece 6h, and the friction pads 5, 5 and the pad spring 6 are assembled to the caliper body 3, the first positioning piece 6g and the second positioning piece 6h abut against the friction pads 5, 5, so that the pad spring 6 can be positioned with respect to the friction pads 5, 5, and an assembling property of the pad spring 6 can be improved.

In addition, since the locking groove 9c that locks the pad spring 6 is formed in the disc turn-in side wall 9b of the friction pad accommodating portion 9 and the disc radial outer side surface 9d of the locking groove 9c is formed on the disc radial outer side than the accommodating groove 3e of the disc rotor 2, when the disc turn-out side and the disc turn-in side of the pad spring 6 are erroneously arranged and assembled in reverse, a set load is greatly increased, and thus, the assembly cannot be performed, and erroneous assembly of the pad spring 6 can be prevented.

In the pad spring 6, the end surfaces 6k, 6k of the first elastic piece 6f and the end surfaces 6n, 6n of the second elastic portion 6e abut against the wall portions 3c, 3c on the opposing disc rotor side of the ceiling opening portion 3b, so that unstable movement due to running vibration of a pad spring can be prevented. In addition, since abutting surfaces of the wall portions 3c, 3c against which the end surfaces 6k, 6k, 6n, 6n abut are casting surfaces, processing cost can be reduced. Further, since the end surfaces 6k, 6k, 6n, 6n including the first positioning piece 6g and the second positioning piece 6h and the bent portion 6m are formed in an arc shape, a contact area can be effectively obtained.

In addition, since the suspension piece 5e protruding to the disc radial outer side, the first pad spring abutting portion 5f, and the second pad spring abutting portion 5g are provided in parallel in the disc circumferential direction on the disc radial outer side surface 5c of the back plate 5b in the friction pad 5, and the recessed portion 5h (space portion) into which the first positioning piece 6g can be inserted is provided between the suspension piece 5e and the first pad spring abutting portion 5f, the first positioning piece 6g can appropriately abut against the back plate 5b.

As in the above-described embodiment, the invention is not limited to being applied to a divided type caliper body, and can also be applied to a monocoque type caliper body. Further, the number of pistons and a configuration of a fluid passage are freely set. In addition, a vehicle body attachment portion formed in an opposing-vehicle-body-outer-side caliper half body may be an axial mount type vehicle body attachment portion having an attachment bolt insertion hole in a disc axial direction without any problem. Further, as in the present embodiment, the invention is not limited to being applied to a caliper body of a piston facing type disc brake, and can also be applied to a caliper body of a pin slide type disc brake in which an action portion including a piston and a reaction portion including a reaction force claw are provided on both side portions of a disc rotor.

### Reference Signs List

1 vehicular disc brake; 2 disc rotor; 3 caliper body; 3a bridge portion; 3b ceiling opening portion; 3c, 3d wall portion; 3e accommodating groove; 4 hanger pin; 5 friction pad; 5a lining; 5b back plate; 5c disc radial outer side surface; 5d hanger pin insertion hole; 5e suspension piece; 5f first pad spring abutting portion; 5g second pad spring abutting portion; 5h recessed portion; 5i disc turn-out side surface; 5j disc turn-in side surface; 5k disc radial outer side surface; 6 pad spring; 6a hanger pin abutting portion; 6b first spring piece; 6c first elastic portion; 6d second spring piece; 6e second elastic portion; 6f first elastic piece; 6g first positioning piece; 6h second positioning piece; 6i locking piece; 6j tip end portion; 6m bent portion; 6k, 6n end surface; 7 coupling bolt; 8 piston; 9 friction pad accommodating portion; 9a disc turn-out side wall; 9b disc turn-in side wall; 9c locking groove; 21 opposing-vehicle-body-side caliper half body; 21a cylinder portion; 21b action portion; 21c bridge portion half body; 21d ceiling opening portion half body; 21e divided surface; 21f disc turn-out side surface; 21g turn-out side body portion; 21h opposing disc rotor side surface; 21i first thinning portion; 21j turn-in side body portion; 21k second thinning portion; 21m disc radial outer side surface; 22 cylinder hole; 23 hydraulic pressure chamber; 24 first working fluid introduction hole; 25a first contouring machining portion; 25b second contouring machining portion; 25c third contouring machining portion; 26 union hole; 26a female screw portion; 27 vehicle body attachment portion; 27a attachment bolt insertion hole; 28 first reinforcing rib; 29 second reinforcing rib; 30 attachment boss portion; 30a pin insertion hole; 31 vehicle-body-side caliper half body; 31a cylinder portion; 31b action portion; 31c bridge portion half body; 31d ceiling opening portion half body; 31e divided surface; 31f disc radial outer side surface; 31g turn-out side body portion; 31h opposing disc rotor side surface; 31i third thinning portion; 31j turn-in side body portion; 31k fourth thinning portion; 32 cylinder hole; 33 hydraulic pressure chamber; 34 second working fluid introduction hole; 35a fourth contouring machining portion; 35b fifth contouring machining portion; 35c sixth contouring machining portion; 36 bleeder hole; 36a female screw portion; 37 bleeder portion; 39 bleeder screw; 39a male screw portion; 40 bleeder cap; 41 third reinforcing rib; 42 fourth reinforcing rib; 43 attachment boss portion; 43a pin insertion hole

## Claims

1. A vehicular disc brake, comprising:
a caliper body including: an action portion arranged on a side portion of a disc rotor and having a cylinder hole into which a piston is to be inserted; and a bridge portion arranged across an outer periphery of the disc rotor;
a pair of friction pads arranged on both side portions of the disc rotor;
a hanger pin disposed in a disc axial direction across an outer periphery of the disc rotor and configured to suspend the pair of friction pads so as to be movable in a disc rotor axial direction; and
a pad spring disposed between the hanger pin and the friction pads and configured to urge the friction pads to at least a disc radial inner side, wherein
the pad spring includes:
a hanger pin abutting portion that abuts against an outer peripheral surface on a disc radial inner side of the hanger pin;
an elastic portion that abuts against the pair of friction pads and urges the friction pads to a disc radial inner side; and
a positioning piece that abuts against the friction pads to determine positioning of the pad spring when the friction pads and the pad spring are assembled to the caliper body.

2. The vehicular disc brake according to claim 1, wherein
the caliper body includes a friction pad accommodating portion that accommodates the friction pads, a locking groove that locks the pad spring is formed on a disc turn-in side wall of the friction pad accommodating portion when a vehicle is moving forward,
the pad spring includes: a first elastic portion that abuts against a disc turn-in side of the friction pads when a vehicle is moving forward and that urges the friction pads to at least a disc radial inner side; and a second elastic portion that abuts against a disc turn-out side of the friction pads when a vehicle is moving forward and that urges the friction pads to a disc radial inner side and to a disc turn-out side,
the first elastic portion is provided with the positioning piece and a locking piece inserted into the locking groove, and
the locking groove is formed on a disc radial outer side than an accommodating groove of the disc rotor.

3. The vehicular disc brake according to claim 1 or 2, wherein
the bridge portion includes a ceiling opening portion in an intermediate portion in a disc circumferential direction,
the first elastic portion is formed to have a wide width in the disc axial direction and is provided with a first preventing portion that abuts against a wall portion of the ceiling opening portion to prevent a behavior of the pad spring, and an abutting surface of the wall portion against which the first preventing portion abuts is a casting surface.

4. The vehicular disc brake according to claim 2 or 3, wherein
the second elastic portion is formed to have a wide width in the disc axial direction and is provided with a second preventing portion that abuts against a wall portion of the ceiling opening portion to prevent a behavior of the pad spring, and an abutting surface of the wall portion against which the second preventing portion abuts is a casting surface.

5. A friction pad used for a vehicular disc brake, the friction pad comprising
a lining attached to a back plate, wherein
the back plate includes a suspension piece having a pin insertion hole in an intermediate portion in a longitudinal direction, and a pad spring abutting portion against which a positioning piece of a pad spring provided in the vehicular disc brake abuts is provided in parallel with the suspension piece when the friction pad is assembled to the vehicular disc brake.

6. The friction pad according to claim 5, further comprising
a recessed portion between the pad spring abutting portion and the suspension piece, the recessed portion serving as a space portion capable of accommodating the positioning piece.
